# EUROPÄISCHE PATENTSCHRIFT

(11) **EP 2 092 202 B1**
(45) Veröffentlichungstag und Bekanntmachung des Hinweises auf die Patenterteilung: **25.09.2013**
(21) Anmeldenummer: 07819299.4
(22) Anmeldetag: 25.10.2007
(51) Int. Cl.: F16B 37/04

(54) **KÄFIGMUTTER**
CAGE NUT
ÉCROU CAGE

(30) Priorität: 18.11.2006 DE 102006054486
(43) Veröffentlichungstag der Anmeldung: 26.08.2009
(73) Patentinhaber: A. Raymond et Cie., 38000 Grenoble (FR)
(72) Erfinder: PAU, Jean-Baptiste, 38850 Bilieu (FR)
(74) Vertreter: RACKETTE Partnerschaft Patentanwälte
(86) Internationale Anmeldenummer: PCT/EP2007/009247
(87) Internationale Veröffentlichungsnummer: WO 2008/058615

(56) Entgegenhaltungen:
- DE-C1- 4 433 470
- US-A- 2 587 134
- US-A- 3 219 086
- US-A- 5 193 643
- US-A- 5 558 369

## Beschreibung

Die Erfindung betrifft eine Käfigmutter gemäß dem Oberbegriff des Patentanspruches 1.

Eine derartige Käfigmutter ist aus DE 44 33 470 C1 bekannt. Die vorbekannte Käfigmutter verfügt über ein plattenartiges Mutterteil, das einen Mutternschaft und an den Mutternschaft angeformte umlaufende Randplatten aufweist. Weiterhin ist ein Mutterhalter vorhanden, der über einen mit einer Durchsteckausnehmung ausgebildeten Auflageabschnitt verfügt, an dem das Mutterteil anliegt. Die Käfigmutter ist mit einer Eingriffsanordnung ausgestattet, die mit den Randplatten zum Halten des Mutterteiles in einer schwimmenden Lagerung zusammenwirkt, wobei die Eingriffsanordnung zwei einander gegenüber liegende Rückhaltezungen aufweist, die jeweils mit einem von dem Auflageabschnitt abstehenden Sockelabschnitt und mit einem gegenüber dem Sockelabschnitt abgewinkelten Endabschnitt ausgebildet sind, wobei sich die Endabschnitte aufeinander zu erstrecken. Weiterhin ist die Eingriffsanordnung mit vier paarweise einander gegenüber liegenden Anschlagzungen ausgebildet, die sich von dem Auflageabschnitt abgewinkelt weg in die gleiche Richtung wie die Sockelabschnitte erstrecken und zwei weitere Randplatten einschließen. Bei dieser Käfigmutter liegen die Rückhaltezungen bündig an den außen liegenden Randseiten von zwei Randplatten an, während die Anschlagzungen an von dem Mutternschaft abgewandten Randseiten der weiteren Randplatten gegenüberliegend angeordnet sind. Dadurch ist das Mutterteil durch die Rückhaltezungen geführt in einer Richtung zwischen den Anschlagzungen verschiebbar. Das Mutterteil ist durch einen zylinderförmigen Mutternschaft sowie durch Randplatten gebildet, wobei die sich rechtwinklig zu dem Auflageabschnitt erstreckenden Anschlagzungen die Randplatten an ihren sich in Richtung zu dem Mutternschaft erstreckenden Längsseiten einschließen und wobei der Abstand zwischen Sockelabschnitten der Rückhaltezungen größer als die Abmessung zwischen den voneinander wegweisenden Stirnseiten der Randplatten und die Breite der Randplatten kleiner als die Dimension zwischen den an einander gegenüberliegenden Randseiten des Mutterhalters ausgebildeten, direkt einander gegenüberliegenden Anschlagzungen ist.

Aus US-A-2,587,134 ist eine Käfigmutter bekannt, bei der ein aus einem quadratischen Mutternschaft und aus einer unter den Mutterschaft gelegten Grundplatte gebildetes Mutterteil von einem aus einem umgeformten Blechstreifen gebildeten Käfigteil umschlossen ist, welches mit umgebogenen Zungenabschnitten in einer Ausnehmung eines Trägerteiles verankerbar ist.

Aus US-A-5,193,643 ist eine Käfigmutter mit einem plattenartigen Mutterteil bekannt, welches zwischen durch zweimal mit rechtem Winkel umgebogenen Randstreifen und einem Paar von einander gegenüber liegenden aufgestellten Anschlagzungen gelagert ist.

US-A-5,558,369 offenbart eine Käfigmutter mit einem plattenartigen Mutterteil, das in einem taschenartig ausgebildeten Käfigteil gelagert ist, wobei das Käfigteil das Mutterteil an drei Randseiten mit Rückhaltestreifen überdeckt und das Mutterteil mit einem aufgestellten Randstreifen gegen Herausrutschen sichert. Das Käfigteil ist durch Punktschweißen seiner Randabschitte an ein Trägerteil befestigt.

Eine weitere Käfigmutter ist aus DE 20 2006 003 639 U1 bekannt. Die vorbekannte Käfigmutter verfügt über ein Mutterteil, das einen Mutternschaft und zwei an einander gegenüberliegenden Seiten des Mutternschaftes an den Mutternschaft angeformte Randplatten aufweist. Weiterhin ist ein Mutterhalter vorhanden, der über einen mit einer Durchsteckausnehmung ausgebildeten Anlageabschnitt verfügt, an dem das Mutterteil aufliegt. Schließlich ist eine Eingriffsanordnung ausgebildet, die mit den Randplatten zum Halten des Mutterteils in einer schwimmenden Lagerung zusammenwirkt, wobei die Eingriffsanordnung durch zwei an zueinander parallelen Randseiten des Anlageabschnittes rechtwinklig abgekantete Seitenwände mit Längsschlitzen gebildet ist, durch die die Randplatten durchgreifen. Durch entsprechende Dimensionierung des Abstandes der Seitenwände sowie der Größe der Längsschlitze ist eine schwimmende Lagerung bewerkstelligt.

Der Erfindung liegt die Aufgabe zugrunde, eine Käfigmutter der eingangs genannten Art anzugeben, die sich einfach relativ dimensionierbaren Aufbau ohne Beeinträchtigung einer zweidimensionalen schwimmenden Lagerung auch bei einem Verzug auf ein Trägerteil aufschweißen lässt und auch gegenüber hohen Anzugsmomenten ausreichend stabil ist.

Diese Aufgabe wird bei einer Käfigmutter der eingangs genannten Art erfindungsgemäß mit den kennzeichnenden Merkmalen des Patentanspruches 1 gelöst.

Dadurch, dass bei der erfindungsgemäßen Käfigmutter das Mutterteil lediglich zwei an einander gegenüber liegenden Seiten des Mutternschaftes angeordnete Randplatten aufweist, die zum einen von den zwischen dem Auflageteil und den nach außen überstehenden Randabschnitten liegenden Rückhaltezungen mit einem gewissen Spiel in Längsrichtung überdeckt sind und an den sich in Richtung zu dem Mutternschaft erstreckenden Längsseiten den lediglich rechtwinklig aufgestellten Anschlagzungen gegenüberliegen, ist das Mutterteil auch bei im Rahmen von nunmehr an den nach außen auskragenden und damit Verformungen an den Rückhaltezungen sowie den Anschlagzungen zum Teil vermeidenden Randabschnitten die schwimmende Lagerung nicht beeinträchtigend durchführbaren Schweißvorgängen bei entsprechend je nach Einbausituation vorgenommenen relativen Dimensionierungen der Rückhaltezungen, der Anschlagszungen und der Randplatten zuverlässig zweidimensional schwimmend und durch die Anschlagzungen auch gegen Verdrehen gesichert gelagert.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispiels der Erfindung. Es zeigen:
- Fig. 1: in einer perspektivischen Ansicht einen Mutterhalter eines Ausführungsbeispiels einer erfindungsgemäßen Käfigmutter,
- Fig. 2: in einer perspektivischen Ansicht das Ausführungsbeispiel gemäß Fig. 1 mit einem mit dem Mutterhalter in Eingriff befindlichen Mutterteil und
- Fig. 3: im Schnitt das Ausführungsbeispiel gemäß Fig. 1 und Fig. 2 in einer Einbausituation.

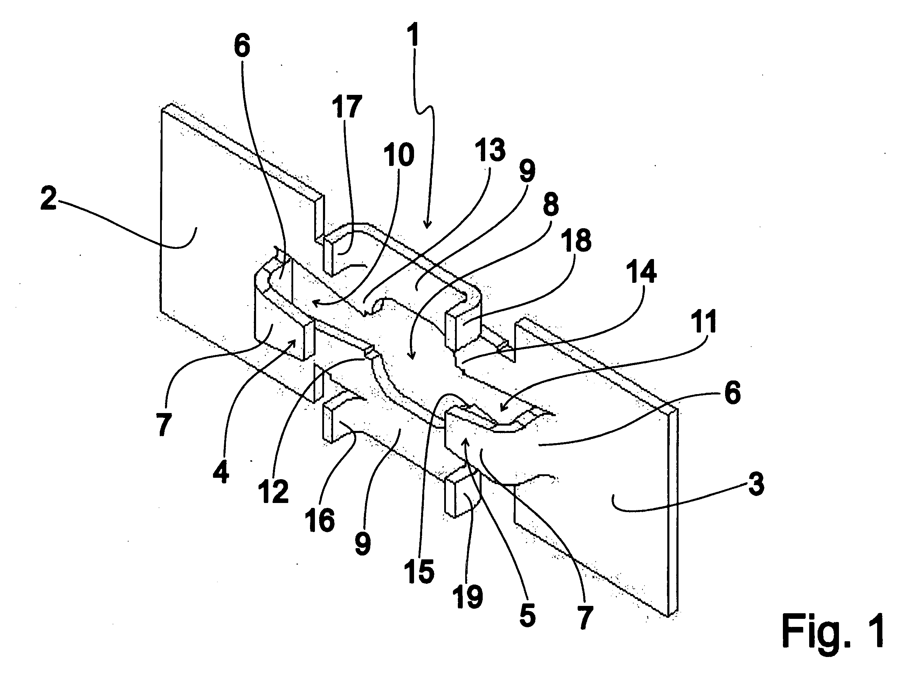

Fig. 1 zeigt in einer perspektivischen Ansicht einen Mutterhalter 1 eines Ausführungsbeispiels einer erfindungsgemäßen Käfigmutter. Der Mutterhalter 1 ist aus einem einzigen Stück Metallblech von rechteckförmiger Gestalt und verfügt über zwei randseitig angeordnete Randabschnitte 2, 3 mit einer in etwa quadratischen Grundfläche. An den aufeinander zu weisenden Seiten der Randabschnitte 2, 3 ist durch einen Stanz-Biege-Vorgang in etwa mittig jeweils eine Rückhaltezunge 4, 5 ausgebildet, wobei jede Rückhaltezunge 4, 5 über einen im Wesentlichen rechtwinklig zu dem Randabschnitt 2, 3 ausgerichteten Sockelabschnitt 6 und einen sich rechtwinklig von dem Sockelabschnitt 6 von dem jeweiligen Randabschnitt 2, 3 in Richtung des anderen Randabschnittes 2, 3 erstreckenden Endabschnitt 7 verfügt. Der Sockelabschnitt 6 und der Endabschnitt 7 jeder Rückhaltezunge 4, 5 sind zum Ausbilden einer sich in Richtung des jeweils freien Endes verjüngenden Gestalt trapezförmig mit miteinander fluchtenden Randseiten ausgebildet, so dass sich von einer Durchsteckausnehmung 8, die mittig in einem zwischen den Randabschnitten angeordneten Auflageabschnitt 9 ausgebildet ist, einander gegenüberliegende, sich in Richtung der Randabschnitte 2, 3 trapezförmig erweiternde Randausnehmungen 10, 11 ausgebildet sind, die in einer durch Anlageabschnitte 12, 13, 14, 15 als Engstellen in die im Durchmesser größer dimensionierte Durchsteckausnehmung 8 münden.

Weiterhin sind im Auflageabschnitt 9 randseitig angeordnete, ebenfalls durch einen Stanz-Biege-Vorgang ausgebildete Anschlagzungen 16, 17, 18, 19 vorhanden, die sich rechtwinklig zu dem Auflageabschnitt 9 erstrecken und auf der gleichen Seite wie die Rückhaltezungen 4, 5 angeordnet sind. Dabei erstrecken sich die Anschlagzungen 16, 17, 18, 19 bis zu einem Abstand von dem Auflageabschnitt 9, der in etwa dem Überstand der Endabschnitte 7 der Rückhaltezungen 4, 5, wenigstens jedoch der Länge der Sockelabschnitte 6 entspricht. Die Anschlagzungen 16, 17, 18, 19 sind in Längsrichtung des Mutterhalters 1 mit einem gegenseitigen Abstand zwischen den freien Enden der Endabschnitte 7 der Rückhaltezungen 4, 5 angeordnet.

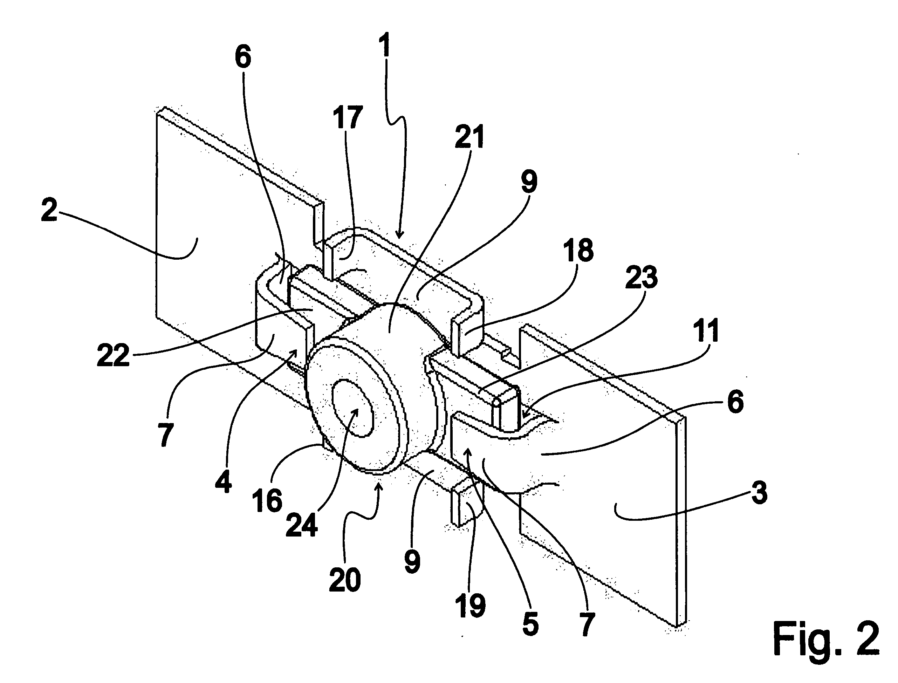

Fig. 2 zeigt in einer perspektivischen Ansicht den Mutterhalter 1 des Ausführungsbeispiels gemäß Fig. 1 mit einem Mutterteil 20, das von einer durch die Rückhaltezungen 4, 5 sowie die Anschlagzungen 16, 17, 18, 19 gebildeten Eingriffsanordnung verliersicher und gegen Verdrehen gesichert schwimmend in dem Mutterhalter 1 gelagert ist. Das Mutterteil 20 ist durch einen zylinderförmigen Mutternschaft 21 sowie durch zwei an einander gegenüberliegenden Seiten des Mutternschaftes 21 angesetzten Randplatten 22, 23 von in etwa quadratischer Gestalt gebildet. Die Randplatten 22, 23 sind an einer Endseite des Mutternschaftes 21 angeordnet und in der Anordnung gemäß Fig. 2 von den Rückhaltezungen 4, 5 hintergriffen. Der Mutternschaft 21 ist mit einer mittig angeordneten, sich in Längsrichtung des Mutternschaftes 21 erstreckenden sowie mit einem Innengewinde versehenen Schraubenausnehmung 24 ausgebildet.

Die Dimensionen des Mutternschaftes 21 sowie der Randplatten 22, 23 sind dabei so in Bezug auf die Rückhaltezungen 4, 5 und die Anschlagzungen 16, 17, 18, 19 eingerichtet, dass der Außendurchmesser des Mutternschaftes 21 kleiner als der Abstand zwischen den aufeinander zu weisenden Stirnseiten der Endabschnitte 7 der Rückhaltezungen 4, 5, der Abstand zwischen den Sockelabschnitten 6 der Rückhaltezungen 4, 5 größer als die Abmessung zwischen den voneinander wegweisenden Stirnseiten der Randplatten 22, 23 und die Breite der Randplatten 22, 23 kleiner als die Dimension zwischen den an einander gegenüberliegenden Randseiten des Mutterhalters 1 ausgebildeten, direkt einander gegenüberliegenden Anschlagzungen 16, 17, 18, 19 ist. Die Anlageabschnitte 12, 13, 14, 15 stützen dabei das Mutterteil 20 insbesondere im Verbindungsbereich der Randplatten 22, 23 und des Mutternschaftes 21.

Somit ist eine hinreichend stabile schwimmende Lagerung des Mutterteiles 20 in dem Mutterhalter 1 mit verhältnismäßig einfach einstellbaren Dimensionen erzielt, wobei das Mutterteil 20 dadurch verhältnismäßig einfach mit dem Mutterhalter 1 verbindbar ist, dass das Umbiegen von zwei auf einer Randseite des Mutterhalter 1 angeordneten Anschlagzungen 16, 17, 18, 19 erst nach Einschieben der Randplatten 22, 23 zwischen die Rückhaltezungen 4, 5 erfolgt.

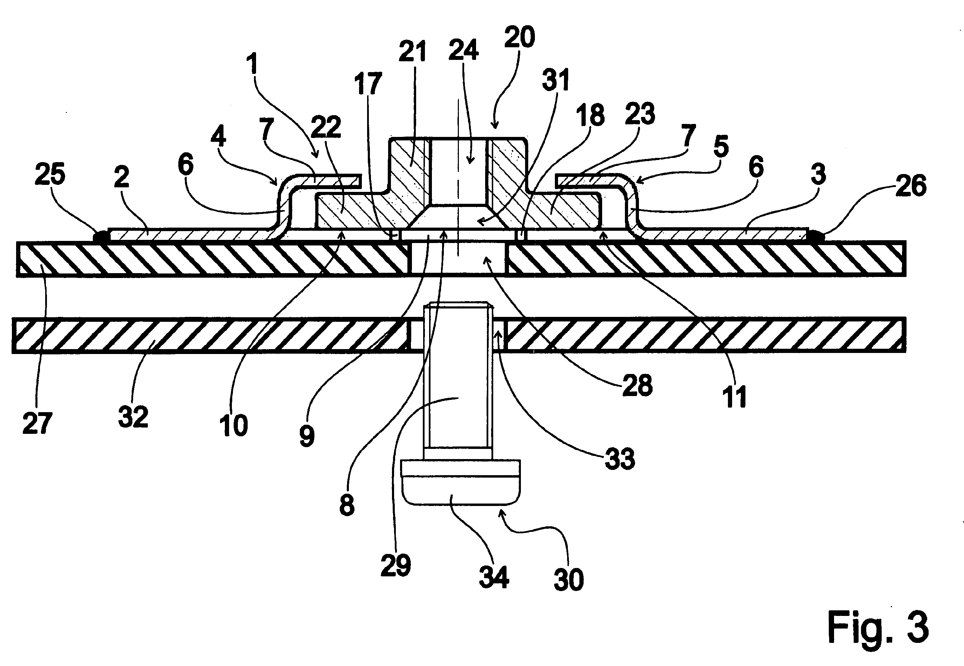

Fig. 3 zeigt im Schnitt das Ausführungsbeispiel einer erfindungsgemäßen Käfigmutter gemäß Fig. 1 und Fig. 2 in einer Einbausituation. In der Überkopf-Einbausituation gemäß Fig. 3 sind die Randabschnitte 2, 3 des Mutterhalters 1 über Schweißnähte 25, 26 mit einem Trägerteil 27 verbunden, wobei die Randabschnitte 3, 4 sowie die Anschlagzungen 16, 17, 18, 19 mit dem durch sie gehaltenen Mutterteil 20 von dem Trägerteil 27 wegweisend angeordnet sind. Die Durchsteckausnehmung 8 ist dabei in Verlängerung einer in dem Trägerteil 27 ausgebildeten Trägerteilausnehmung 28 angeordnet, so dass ein mit einem Außengewinde ausgebildeter Schraubenschaft 29 einer Befestigungsschraube 30 über einen in dem Muttemschaft 21 ausgebildeten, sich in Richtung der Durchsteckausnehmung 8 erweiternden Einführtrichter 31 einführbar und in Eingriff mit dem in der Schraubenausnehmung 24 ausgebildeten Innengewinde bringbar ist. Dabei greift zum Verbinden eines Anbauteiles 32 mit dem Trägerteil 27 der Schraubenschaft 29 durch eine in dem Anbauteil 32 ausgebildete Anbauteilausnehmung 33 durch, deren Innendurchmesser kleiner als der Außendurchmesser eines Schraubenkopfes 34 der Befestigungsschraube 30 ist.

Aus Fig. 3 ist ersichtlich, dass aufgrund der Ausbildung der Eingriffsanordnung mit die Randplatten 22, 23 hintergreifenden, das Mutterteil 20 in axialer Richtung gegen ein Austreten aus dem Mutterhalter 1 beispielsweise bei Einführen der Befestigungsschraube 30 in den Mutternschaft 21 oder ein Herausfallen einer gegenüber der Anordnung gemäß Fig. 3 um 180 Grad gedrehten Einbausituation gesichert ist. Die Anschlagzungen 16, 17, 18, 19 wiederum blockieren ein Verdrehen und sichern gegen ein seitliches Herausrutschen des Mutterteiles 20, indem sie für die Randplatten 22, 23 einen Anschlag bilden. Dabei ist das Spiel der schwimmenden Lagerung des Mutterteiles 20 in dem Mutterhalter 1 in äußerst einfacher Art und Weise durch entsprechend relative Dimensionierungen der Rückhaltezungen 4, 5, der Anschlagszungen 16, 17, 18, 19, des Mutternschaftes 21 sowie der Randplatten 22, 23 sichergestellt, so dass Verformungen des Mutterhalters 1 beispielsweise dann verhältnismäßig einfach ausgleichbar sind, wenn es erforderlich ist, die Schweißnähte 25, 26 bis in die Nähe des Auflageabschnittes 9 zu legen, um eine besonders hohe Stabilität beim Anbringen an das Trägerteil 27 zu erzielen.

Weiterhin lässt sich der Darstellung gemäß Fig. 3 besonders deutlich entnehmen, dass der Mutternschaft 21 mit einer verhältnismäßig dicken Wandstärke ausgebildet ist, so dass es aufgrund der hohen Stabilität der erfindungsgemäßen Käfigmutter durch die durch Rückhaltezungen 4, 5 sowie Anschlagzungen 16, 17, 18, 19 gebildeten stabilen Anschläge möglich ist, bei einem Abnutzen des Innengewindes der Schraubenausnehmung 24 in den Mutternschaft 21 ein neues Innengewinde mit einem größeren Durchmesser zu schneiden, falls, wie häufig vorkommend, das Mutterteil 20 in der Einbausituation nicht mehr zugänglich ist.

## Patentansprüche

1. Käfigmutter mit einem Mutterteil (20), das einen Mutternschaft (21) und an den Mutternschaft (21) angeformte Randplatten (22, 23) aufweist, mit einem als Stanz-Biege-Teil ausgebildeten Mutterhalter (1), der über einen mit einer Durchsteckausnehmung (8) ausgebildeten Auflageabschnitt (9) verfügt, an dem das Mutterteil (20) anliegt, und mit einer Eingriffsanordnung (4, 5, 16, 17, 18, 19), die mit den Randplatten (22, 23) zum Halten des Mutterteiles (20) in einer schwimmenden Lagerung zusammenwirkt, wobei die Eingriffsanordnung zwei einander gegenüberliegende Rückhaltezungen (4, 5) aufweist, die jeweils mit einem von dem Auflageabschnitt (9) abstehenden Sockelabschnitt (6) und mit einem gegenüber dem Sockelabschnitt (6) abgewinkelten Endabschnitt (7) ausgebildet sind, wobei sich die Endabschnitte (7) aufeinander zu erstrecken, und über vier paarweise einander gegenüberliegende Anschlagzungen (16, 17, 18, 19) verfügt, die sich von dem Auflageabschnitt (9) abgewinkelt weg in die gleiche Richtung wie die Sockelabschnitte (6) erstrecken und die Randplatten (22, 23) einschließen, wobei die sich rechtwinklig zu dem Auflageabschnitt (9) erstreckenden Anschlagzungen (16, 17, 18, 19) die Randplatten (22, 23) an ihren sich in Richtung zu dem Mutternschaft (21) erstreckenden Längsseiten einschließen und wobei der Abstand zwischen Sockelabschnitten (6) der Rückhaltezungen (4, 5) größer als die Abmessung zwischen den voneinander wegweisenden Stirnseiten der Randplatten (22, 23) und die Breite der Randplatten (22, 23) kleiner als die Dimension zwischen den an einander gegenüberliegenden Randseiten des Mutterhalters (1) ausgebildeten, direkt einander gegenüberliegenden Anschlagzungen (16, 17, 18, 19) ist, **dadurch gekennzeichnet, dass** zwei Randplatten (22, 23) vorhanden sind, die an einander gegenüberliegenden Seiten des Mutternschaftes (21) angesetzt sind, dass zwei Randabschnitte (2, 3) vorhanden sind, zwischen denen der Auflageabschnitt (9) angeordnet ist, an deren aufeinander zu weisenden Seiten die Rückhaltezungen (4, 5) ausgebildet und die so dimensioniert sind, dass der Mutterhalter (1) mit wenigstens einer Schweißnaht (25, 26), die einen Abstand von dem Auflageabschnitt (9) aufweist, an ein Trägerteil (27) aufschweißbar ist, dass jede Rückhaltezunge (4, 5) über einen rechtwinklig zu dem Randabschnitt (2, 3) ausgerichteten Sockelabschnitt (6) sowie einen sich rechtwinklig von dem Sockelabschnitt (6) von dem oder jedem Randabschnitt (2, 3) in Richtung des anderen Randabschnittes (2, 3) erstreckenden Endabschnitt (7) verfügt und dass die Anschlagzungen (16, 17, 18, 19) und die Rückhaltezungen (4, 5) so aus dem Auflageabschnitt (9) ausgestanzt sind, dass die Anschlagszungen (16, 17, 18, 19) und die Rückhaltezungen (4, 5) auf der gleichen Seite des Auflageabschnittes (9) angeordnet sind.

2. Käfigmutter nach Anspruch 1, **dadurch gekennzeichnet, dass** die Rückhaltezungen (4, 5) eine sich von dem jeweiligen Sockelabschnitt (6) in Richtung des freien Endes des jeweiligen Endabschnittes (7) verjüngende Gestalt aufweisen, so dass benachbart der Durchsteckausnehmung (8) einkragende Anlageabschnitte (12, 13, 14, 15) vorhanden sind, deren paarweiser Abstand jeweils kleiner als der größte Durchmesser des Mutterteiles (20) ist.

3. Käfigmutter nach Anspruch 2, **dadurch gekennzeichnet, dass** die Endabschnitte (7) trapezförmig ausgebildet sind.

4. Käfigmutter nach Anspruch 3, **dadurch gekennzeichnet, dass** die Sockelabschnitte (6) trapezförmig mit fluchtend an die Endabschnitte (7) angeformten Randseiten ausgebildet sind.

5. Käfigmutter nach einem der Ansprüche 1 bis 4, **dadurch gekennzeichnet, dass** die Anschlagzungen (16, 17, 18, 19) rechtwinklig zu dem Auflageabschnitt (9) ausgerichtet sind.

6. Käfigmutter nach einem der Ansprüche 1 bis 5, **dadurch gekennzeichnet, dass** die Anschlagzungen (16, 17, 18, 19) sich wenigstens so weit wie die Sockelabschnitte (6) von dem Auflageabschnitt (9) weg erstrecken.

## Claims

1. Caged nut having a nut component (20) which has a main nut body (21) and edge fins (22, 23) integrally formed on the main nut body (21), having a nut-holder (1), in the form of a stamped/punched and bent part, which has a supporting portion (9) which is formed to have a through-opening (8) and against which the nut component (20) rests, and having an engaging arrangement (4, 5, 16, 17, 18, 19) which co-operates with the edge fins (22, 23) to hold the nut component (20) in a floating position, the engaging arrangement having two retaining tongues (4, 5) situated opposite one another which are each formed to have a base portion (6) which projects from the supporting portion (9) and an end portion (7) which is angled relative to the base portion (6), the end portions (7) extending towards one another, and the engaging arrangement having four abutment tongues (16, 17, 18, 19) of which pairs are situated opposite one another and which angle away from the supporting portion (9) and in so doing extend in the same direction as the base portions (6) and enclose the edge fins (22, 23), the abutment tongues (16, 17, 18, 19), which extend at right angles to the supporting portion (9), enclosing the edge fins (22, 23) on the latter's longitudinal sides extending towards the main nut body (21) and the distance between the base portions (6) of the retaining tongues (4, 5) being greater than the distance between the end-faces of the edge fins (22, 23) which face away from one another and the width of the edge fins (22, 23) being smaller than the distance between the abutment tongues (16, 17, 18, 19) which are formed on opposite edges of the nut-holder (1) from one another and which are situated directly opposite one another, **characterised in that** there are two edge fins (22, 23) which are positioned on opposite sides of the main nut body (21) from one another, **in that** there are two edge portions (2, 3) between which the supporting portion (9) is arranged, on facing sides of which the retaining tongues (4, 5) are formed, and whose size is such that the nut-holder (1) can be welded to a carrier component (27) by at least one weld (25, 26) which is at a distance from the supporting portion (9), **in that** each retaining tongue (4, 5) has a base portion (6) aligned at right angles to the edge portion (2, 3) and an end portion (7) which extends at right angles from the base portion (6) and from the or each edge portion (2, 3) towards the other edge portion (2, 3), and **in that** the abutment tongues (16, 17, 18, 19) and the retaining tongues (4, 5) are stamped/punched out of supporting portion (9) in such a way that the abutment tongues (16, 17, 18, 19) and the retaining tongues (4, 5) are arranged on the same side of the supporting portion (9).

2. Caged nut according to claim 1, **characterised in that** the retaining tongues (4, 5) are of a configuration which tapers from their respective base portions (6) towards the free ends of their respective and portions (7), there thus being contact-making portions (12, 13, 14, 15) which are indented adjacent the through-opening (8), the distance between each pair of these contact-making portions (12, 13, 14, 15) being less than the maximum diameter of the nut component (20).

3. Caged nut according to claim 2, **characterised in that** the end portions (7) are of a trapezoidal form.

4. Caged nut according to claim 3, **characterised in that** the base portions (6) are of a trapezoidal form having edges formed to align with the end portions (7).

5. Caged nut according to one of claims 1 to 4, **characterised in that** the abutment tongues (16, 17, 18, 19) are aligned at right angles to the supporting portion (9).

6. Caged nut according to one of claims 1 to 5, **characterised in that** the abutment tongues (16, 17, 18, 19) extend at least as far away from the supporting portion (9) as the base portions (6).

## Revendications

1. Ecrou-cage, comprenant un élément formant écrou (20), qui se compose d'un fût (21) et de plaques latérales (22, 23) réalisées solidaires par formage du fût (21), comprenant un élément porte-écrou (1) réalisé simultanément par pliage et découpage à la presse, qui est muni d'une portion d'assise (9) dans laquelle est ménagé un évidement définissant un passage d'emmanchement (8) sur lequel l'élément formant écrou (20) est en contact d'application et comprenant un agencement de mise en prise d'encastrement (4, 5, 16, 17, 18, 19), qui opère en combinaison avec les plaques latérales (22, 23) pour maintenir l'élément formant écrou (20) dans une disposition flottante, dans lequel l'agencement de mise en prise d'encastrement comporte deux languettes de retenue (4, 5) disposées vis-à-vis l'une de l'autre, qui sont respectivement munies d'une portion formant socle (6) faisant saillie par rapport à la portion d'assise (9) et d'une portion d'extrémité (7) qui est repliée en angle droit par rapport à la portion formant socle (6), dans lequel les portions d'extrémité (7) sont orientés l'une vers l'autre et sont munies de quatre languettes de butée (16, 17, 18, 19) respectivement disposées face à face par paires, qui vont en s'écartant, suivant une disposition repliée en angle droit, de la portion d'assise (9) dans la même direction que les portions formant socle (6) et enserrent les plaques latérales (22, 23), dans lequel les languettes de butée (16, 17, 18, 19) qui s'étendent perpendiculairement à la portion d'assise (9), enserrent les plaques latérales (22, 23) au niveau de leurs grands côtés qui s'étendent dans la direction du fût (21) et dans lequel l'intervalle d'écartement entre les portions formant socle (6) des languettes de retenue (4, 5) est plus grand que la cote de séparation respective des faces antérieures des plaques latérales (22, 23), qui sont orientées en opposition l'une par rapport à l'autre, et la largeur des plaques latérales (22, 23) est plus petite que la cote de séparation existant entre les languettes de butée (16, 17, 18, 19) respectivement directement opposées, ménagées sur les bords latéraux se faisant respectivement face de l'élément porte-écrou (1), **caractérisé en ce qu'**il est prévu deux plaques latérales (22, 23) qui sont disposées attenantes à des côtés respectivement opposés du fût constitutif de l'écrou (21), **en ce qu'**il est prévu deux portions de rive (2, 3) entre lesquelles la portion d'assise (9) est disposée, sur les côtés se faisant respectivement face de laquelle les languettes de retenue (4, 5) sont disposées et qui sont dimensionnées dans une proportion telle que l'élément porte-écrou (1) peut être soudé sur une pièce porteuse (27) à l'aide d'au-moins un cordon de soudure (25, 26) qui est distant de la portion d'assise (9), **en ce que** chaque languette de retenue (4, 5) comporte une portion formant socle (6) orientée perpendiculairement à la portion de rive (2, 3) ainsi qu'une portion d'extrémité (7) s'étendent perpendiculairement, depuis la portion formant socle (6), de la ou de chaque portion de rive (2, 3) dans la direction de l'autre portion de rive (2, 3) et **en ce que** les languettes de butée (16, 17, 18, 19) et les languettes de retenue (5, 5) sont découpées à la presse dans la portion d'assise (9) de telle façon que les languettes de butée (16, 17, 18, 19) et les languettes de retenue (4, 5) sont disposées sur le même côté de la portion d'assise (9).

2. Ecrou-cage selon la revendication 1, **caractérisé en ce que** les languettes de retenue (4, 5) présentent une configuration qui va en s'amenuisant de la portion formant socle respective (6) dans la direction de l'extrémité libre de la portion d'extrémité (7) respective, ce qui fait qu'il existe, au voisinage de l'évidement définissant un passage d'emmanchement (8), des portion d'assise formant collerette (12, 13, 14, 15), dont l'intervalle d'écartement deux par deux est respectivement plus petit que le diamètre maximum de l'élément formant écrou (20).

3. Ecrou-cage selon la revendication 2, **caractérisé en ce que** les portions d'extrémité (7) ont une forme trapézoïdale.

4. Ecrou-cage selon la revendication 3, **caractérisé en ce que** les portions formant socle (6) ont une forme trapézoïdale avec des rives réalisées solidaires des portions d'extrémité (7) dans un même plan d'alignement.

5. Ecrou-cage selon l'une des revendications 1 à 4, **caractérisé en ce que** les languettes de butée (16, 17, 18, 19) sont orientées perpendiculairement à la portion d'assise (9).

6. Ecrou-cage selon l'une des revendications 1 à 5, **caractérisé en ce que** les languettes de butée (16, 17, 18, 19) s'étendent vers l'extérieur depuis la portion d'assise (9) au moins aussi loin que les portions formant socle (6).
